# EUROPÄISCHE PATENTSCHRIFT

(11) **EP 1 350 998 B1**
(45) Veröffentlichungstag und Bekanntmachung des Hinweises auf die Patenterteilung: **10.08.2005**
(21) Anmeldenummer: 03005655.0
(22) Anmeldetag: 13.03.2003
(51) Int. Cl.: F16K 3/26, B05B 9/03, B05B 12/14

(54) **Ventil**
Valve
Soupape

(30) Priorität: 03.04.2002 DE 10214759
(43) Veröffentlichungstag der Anmeldung: 08.10.2003
(73) Patentinhaber: LacTec GmbH Gesellschaft für moderne Lackiertechnik, 63110 Rodgau (DE)
(72) Erfinder: Ott, Winfried, 63110 Rodgau (DE)
(74) Vertreter: Schieferdecker, Lutz, Dipl.-Ing.

(56) Entgegenhaltungen:
- EP-A- 1 093 858
- EP-A- 1 114 677
- EP-A- 1 207 326
- GB-A- 2 159 243
- US-A- 4 856 756

## Beschreibung

Die Erfindung betrifft ein Ventil für eine molchbare Leitung, die für Beschichtungsmaterial und insbesondere für Lack vorgesehen ist, wobei das Ventil Merkmale des Oberbegriffes von Patentanspruch 1 aufweist.

Ventile der genannten Art werden in automatisch arbeitenden Lackieranlagen eingesetzt. Sie weisen ein Ventilgehäuse mit in der Regel einer Ventilkammer und einem federbelasteten, gegen die Kraft der Feder bewegbaren Ventilverschlußkörper auf und dienen zum Anschließen von mindestens einer zweiten Leitung. Sowohl für die Zuführung von Sonderfarbtönen zu den Lackierkabinen zum Beispiel bei der Lackierung von Kraftfahrzeugkarosserien als auch für die Rückgewinnung von Lackresten aus den Zuführungsleitungen zwischen den automatisch arbeitenden Farbwechslern und den zugehörigen Zerstäubern werden Molche eingesetzt, die den durch die Länge der Leitungen entstehenden Füllverlust minimieren sollen.

Im Rahmen dieser Technik werden vielfach Molche eingesetzt, die mehrfach verwendet werden bzw. sich für längere Zeit in einer abgeschlossenen Leitung vorwärts und rückwärts bewegen, um die jeweils in den Leitungen enthaltenen Lackmengen von einem Schiebemedium abzugrenzen.

Es ist aus diesem Grund zweckmäßig, sowohl die Molche als auch die Leitungen, in denen sich die Molche bewegen, so zu gestalten, daß die Lebensdauer der Molche so lang wie möglich ist. Eine häufige Erneuerung oder auch eine komplexe Überwachung der Molche soll vermieden werden.

Der Erfindung liegt daher die Aufgabe zugrunde, Maßnahmen im Ventilbereich vorzusehen, die es erlauben, eine erheblich höhere Standzeit der eingesetzten Molche gegenüber bisher zu erreichen. Auch sollen in den Ventilen Stellen und Bereiche vermieden werden, an denen sich Rückstände bilden können, die von den Molchen nicht erfaßt werden.

Zur Lösung dieser Aufgabe sieht die Erfindung mit den Merkmalen des kennzeichnenden Teiles von Patentanspruch 1 vor, daß das Ventilgehäuse und der Ventilverschlußkörper jeweils fluchtende und in der Schließstellung unmittelbar und konturengleich aneinander anschließende Bohrungen mit jeweils gleichem Durchmesser aufweisen, der ferner gleich dem lichtem Durchmesser der molchbaren Leitung ist, und daß der Ventilverschlußkörper zum Freigeben und Verschließen von mindestens einer abzweigenden Leitung in Achsrichtung der Bohrung im Ventilgehäuse bewegbar ist.

Das Ventil weist im Bohrungsbereich sowie im geschlossenen Zustand, wenn es von einem Molch durchlaufen werden kann, keinerlei vorstehende Kanten und auch keinerlei Hinterschneidungen auf, die zu einer Beschädigung der Molchlippen führen würden bzw. in denen sich vom Molch nicht erfaßbare Lackrückstände ansammeln könnten. Die besagten Merkmale dienen aus diesem Grund dazu, die Standzeit der eingesetzten Molche deutlich zu erhöhen und sie vermindern ebenfalls deutlich die bisher in Vertiefungen im Bereich von Abzweigstellen sich festsetzenden und vom Molch nicht zu erfassenden Lackrückstände.

Weiterbildungen und besondere Ausgestaltungen der Erfindung gehen aus Unteransprüchen und der Beschreibung im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1: einen Schnitt durch ein Ventil in geschlossenem Zustand;
- Fig. 2: einen Schnitt wie in Fig. 1 mit dem Ventilverschlußkörper in geöffnetem Zustand und
- Fig. 3: einen Schnitt längs der Linie III - III in Fig. 2.

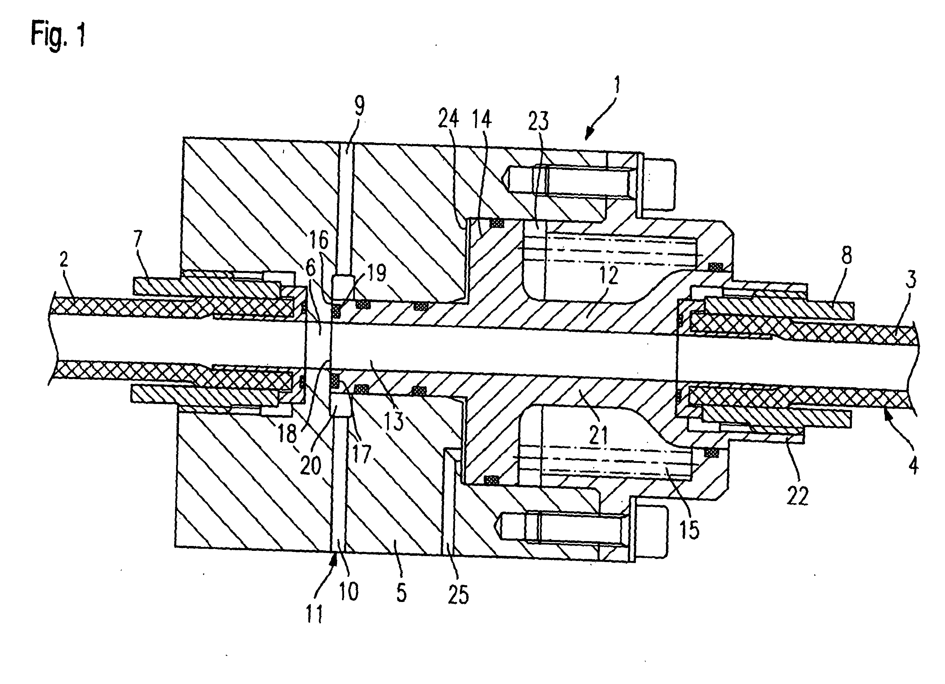

Ein Ventil 1, das zwischen zwei Leitungsstücken 2 und 3 einer durchgehend molchbaren Leitung 4 angeordnet ist, umfaßt gemäß Fig. 1 ein Ventilgehäuse 5 mit einer Bohrung 6, deren Durchmesser gleich dem lichtem Durchmesser der Leitung 4 ist. Die beiden Leitungsstücke 2 und 3 sind mit üblichen Verbindungselementen 7 und 8 an das Ventilgehäuse 5 angeschlossen.

Gemäß dem in den Fig. dargestellten Ausführungsbeispiel weist das Ventilgehäuse 5 zwei weitere, abzweigende bzw. sich quer zu der Bohrung 6 erstreckende Bohrungen 9 und 10 auf. Sie können Teil einer zweiten Leitung 11 oder weiterer Leitungen sein, die mit Hilfe des Ventiles 1 wahlweise an die Leitung 4 anschließbar sind.

Zum Öffnen und Schließen des Ventiles 1 ist ein Ventilverschlußkörper 12 vorgesehen. Er weist ebenfalls eine Bohrung 13 für das Strömungsmedium auf. Die Bohrung 6 für das Strömungsmedium in dem Ventilgehäuse 5 und die Bohrung 13 in dem Ventilverschlußkörper 12 sind zueinander fluchtend sowie konturengleich und in der Schließstellung unmittelbar mit jeweils gleichem Durchmesser aneinander anschließend angeordnet, wobei ihr Durchmesser gleich dem lichten Durchmesser der molchbaren Leitung 4 ist. In der Schließstellung des Ventiles 1 ist es daher möglich, daß sich ein in den Figuren nicht dargestellter Molch durch die gesamte Leitung 4 und durch das Ventil 1 hindurchbewegt, ohne dabei Kanten und Vorsprünge bzw. hinterschnittene Stellen und Bereiche passieren zu müssen.

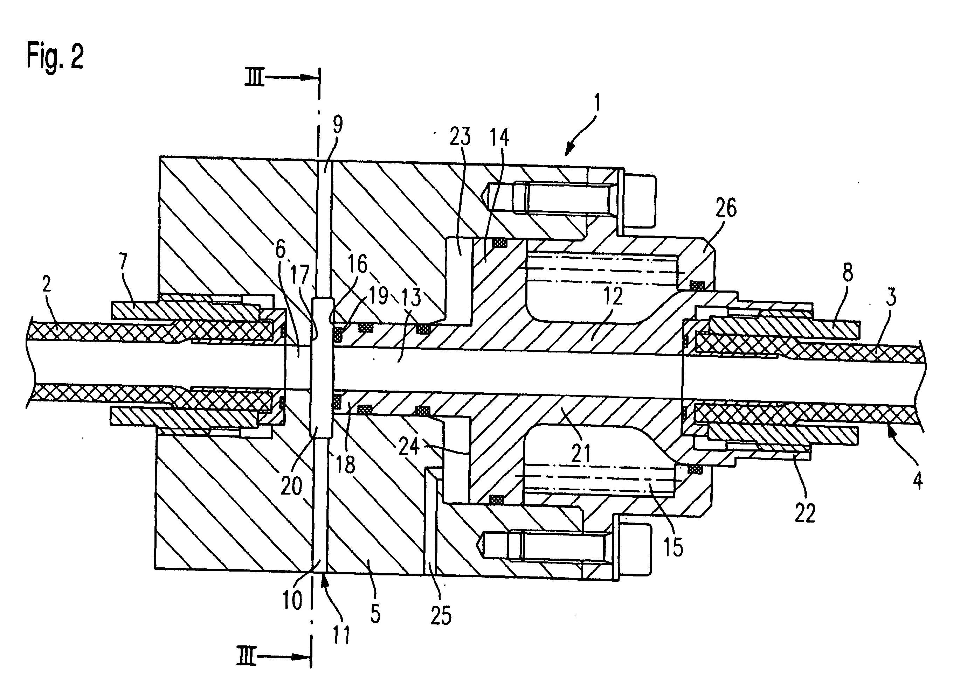

Zum Öffnen des Ventiles 1 und zum Herstellen einer Verbindung zwischen der durchgehenden Leitung 4 mit der sich gemäß Fig. 1 quer dazu erstrekkenden Leitung 11 ist der Ventilverschlußkörper 12 in axialer Richtung bewegbar in dem Ventilgehäuse 5 angeordnet. Gegen die Kraft einer ihn im Bereich eines Flansches 14 beaufschlagenden Feder 15 ist der Ventilverschlußkörper 12 mit einer Dichtfläche 16 von einer Ventilsitzfläche 17 abhebbar, wie ein Vergleich der beiden Fig. 1 und 2 zeigt.

Die Dichtfläche 16 ist eine stirnseitig am freien Ende 18 des Ventilverschlußkörpers 12 angeordnete Ringfläche. Zweckmäßigerweise wird sie von einem Dichtring 19 gebildet.

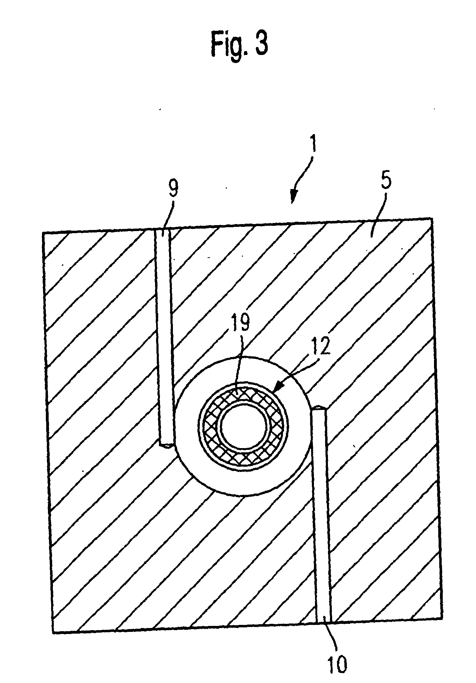

Eine Ventilkammer 20 ist außen im Bereich des freien Endes des Ventilverschlußkörpers 12 mindestens partiell vorgesehen. Zweckmäßigerweise ist die Ventilkammer 20 ringförmig und umgibt das freie Ende 18 des Ventilverschlußkörpers 12 koaxial. Die beiden Bohrungen 9 und 10 der Leitung 11 münden in die Ventilkammer 20, wie die Fig. 1 und 3 zeigen.

Sobald sich der Ventilverschlußkörper 12 derart in axialer Richtung bewegt, daß seine ringförmige Dichtfläche 16 von der ringförmigen Ventilsitzfläche 17 abgehoben ist (Fig. 2), besteht eine strömungsleitende Verbindung von der Bohrung 6 im Ventilgehäuse 5 und der Bohrung 13 im Ventilverschlußkörper 12 zu der Ventilkammer 20 und umgekehrt, so daß ein Strömungsmedium aus der Leitung 4 zugleich in die Leitung 11 bzw. in die abzweigenden Bohrungen 9 und 10 oder umgekehrt strömen kann.

Die Ventilkammer 20 ist bei geschlossenem Ventil eine Ringkammer. Das Ventil 1 ist daher entsprechend ein Ringspaltventil.

Der Ventilverschlußkörper 12 besteht im wesentlichen aus einem hohlen Ventilschaft 21, an dessen zweiten Ende 22 das Leitungsstück 3 der Leitung 4 anschließbar ist. Im Abstand von beiden Enden 18 und 22 ist der Flansch 14 angeordnet, der einerseits von der Ventilfeder 15 beaufschlagt ist und ferner als Kolben eines pneumatisch arbeitenden Stellantriebes arbeitet. Er ist im Ventilgehäuse 5 in einer Zylinderkammer 23 angeordnet und gegen die Kraft der Ventilfeder 15 verschiebbar, wozu eine ringförmige Kolbenfläche 24 an dem Flansch 14 mit einem Druckmedium aus einer Leitung 25 beaufschlagt wird.

Die Ventilfeder 15 stützt sich mit ihrem zweiten Ende an einem Deckel 26 ab, der die Zylinderkammer 23 zugleich verschließt.

Gemäß Ausführungsbeispiel dient der Deckel 26 auch zur Führung des Ventilschaftes 21.

Das Ventil 1 findet Verwendung an Abzweig- und/oder Verbindungsstellen von Leitungen, wobei mindestens die eine Leitung 4 zugleich molchbar ist.

Zweckmäßigerweise ist ein Leitungsstück 3 der durchgehenden Leitung 4 unmittelbar an den axial bewegbaren Ventilschaft 21 mit einer konturengleichen Bohrung anschließbar.

Der als Stellkolben dienenden Flansch 14 ist einstückig mit dem hohlem Ventilschaft 21 verbunden. Sie bilden eine Einheit.

Die Ventilsitzfläche 17 begrenzt die Bohrung 6 im Ventilgehäuse 5, so daß auch die Ventilsitzfläche 17 eine Bohrung aufweist, die molchtauglich ist bzw. denselben Durchmesser aufweist wie der Durchmesser der Leitung 4.

Die Bohrung 6 und auch der Ventilverschlußkörper 12 bzw. der Ventilschaft 21 mit der Bohrung 13 sind zentrisch im Ventilgehäuse 5 angeordnet, wie die Figuren zeigen.

## Patentansprüche

1. Ventil für eine Abzweig- und/oder Verbindungsstelle einer molchbaren Leitung ( 4 ) für Beschichtungsmaterial und insbesondere für Lack mit einem Ventilgehäuse ( 5 ) für eine erste, durchgehende Leitung ( 4 ), an die mindestens eine zweite Leitung ( 11 ) wahlweise anschließbar ist, sowie mit einem federbelasteten und gegen die Kraft einer Ventilfeder ( 15 ) bewegbaren Ventilverschlußkörper ( 12 ),
**dadurch gekennzeichnet**
**daß** das Ventilgehäuse ( 5 ) und der Ventilverschlußkörper ( 12 ) jeweils fluchtende und konturengleich in der Schließstellung unmittelbar aneinander anschließende Bohrungen ( 6 und 13 ) mit gleichem Durchmesser aufweisen,
wobei der Durchmesser gleich dem lichten Durchmesser der molchbaren Leitung ( 4 ) ist,
und **daß** der Ventilverschlußkörper ( 12 ) zum Freigeben und Verschließen der zweiten Leitung ( 11 ) im Ventilgehäuse ( 5 ) in Achsrichtung von dessen Bohrung ( 6 ) bewegbar ist.

2. Ventil nach Anspruch 1, **dadurch gekennzeichnet,**
**daß** der Ventilverschlußkörper ( 12 ) einen hohlen Ventilschaft ( 21 ) und an dessen einem, freien Ende ( 21 ) eine ringförmige Stirnfläche als Dichtfläche ( 16 ) aufweist, die von einer gehäuseseitigen, ringförmigen Ventilsitzfläche ( 17 ) abhebbar und auf diese aufsetzbar ist.

3. Ventil nach Anspruch 2, **dadurch gekennzeichnet.**
**daß** gehäuseseitig eine Ventilkammer ( 20 ) vorgesehen ist, die mindestens partiell außen im Bereich des einen freien Endes ( 18 ) des Ventilschaftes ( 21 ) angeordnet und mit mindestens einer zweiten Leitung ( 11 ) verbunden ist.

4. Ventil nach Anspruch 3, **dadurch gekennzeichnet,**
**daß** die Ventilkammer ( 20 ) eine Ringkammer ist.

5. Ventil nach Anspruch 2, **dadurch gekennzeichnet,**
**daß** der Ventilschaft ( 21 ) einen als Kolben dienenden, von einem Druckmedium beaufschlagbaren Flansch ( 14 ) aufweist, der in einer den Ventilschaft ( 21 ) umgebenden Zylinderkammer ( 23 ) bewegbar ist.

6. Ventil nach Anspruch 5, **dadurch gekennzeichnet,**
**daß** sich die Ventilfeder ( 15 ) an dem Flansch ( 14 ) abstützt.

7. Ventil nach Anspruch 5, **dadurch gekennzeichnet,**
**daß** die Zylinderkammer ( 23 ) mit Hilfe eines Deckels ( 26 ) verschließbar ist.

8. Ventil nach Anspruch 7, **dadurch gekennzeichnet,**
**daß** der Ventilschaft ( 21 ) im Deckel ( 26 ) geführt ist.

9. Ventil nach Anspruch 2, **dadurch gekennzeichnet,**
**daß** ein Leitungsstück ( 3 ) der durchgehenden Leitung ( 4 ) unmittelbar an den axial bewegbaren Ventilschaft ( 21 ) anschließbar ist.

10. Ventil nach Anspruch 5 , **dadurch gekennzeichnet,**
**daß** der als Kolben dienende Flansch ( 14 ) und der Ventilschaft ( 21 ) eine Einheit bilden.

11. Ventil nach Anspruch 2, **dadurch gekennzeichnet,**
**daß** die Ventilsitzfläche ( 17 ) der molchbaren Bohrung ( 6 ) des Ventilgehäuses ( 5 ) zugeordnet ist.

12. Ventil nach Anspruch 1, **dadurch gekennzeichnet,**
**daß** die Bohrung ( 6 ) und der Ventilverschlußkörper ( 12 ) in Gestalt eines hohlen Ventilschaftes ( 21 ) zentrisch im Ventilgehäuse ( 5 ) angeordnet sind.

## Claims

1. Valve for a branch point and/or connecting point of a piggable duct (4) for coating material and, in particular, for paint, with a valve housing (5) for a first, continuous duct (4), with which at least one second duct (11) is selectably connectible, as well as with a springloaded valve closure body (12) movable against the force of a valve spring (15), **characterised in that** the valve housing (5) and the valve closure body (12) have respectively aligned bores (6 and 13) of the same profile and same diameter directly connected together in the closed setting, wherein the diameter is equal to the clear diameter of the piggable duct (4), and that the valve closure body (12) is movable in the valve housing (5) in axial direction of the bore (6) thereof for opening and closing the second duct (11).

2. Valve according to claim 1, **characterised in that** the valve closure body (12) comprises a hollow valve shank (21) and has at one, free end (18) thereof an annular end face as sealing surface (16), which can be lifted off and placed on an annular valve seating surface (17) at the housing.

3. Valve according to claim 2, **characterised in that** a valve chamber (20) which is arranged at least partly outside in the region of the one free end (18) of the valve shank (21) and is connected with at least one second duct (11) is provided at the housing side.

4. Valve according to claim 3, **characterised in that** the valve chamber (20) is an annular chamber.

5. Valve according to claim 2, **characterised in that** the valve shank (21) has a flange (14) which serves as a piston and can be loaded by a pressure medium and which is movable in a cylinder chamber (23) surrounding the valve shank (21).

6. Valve according to claim 5, **characterised in that** the valve spring (15) is supported at the flange (14).

7. Valve according to claim 5, **characterised in that** the cylinder chamber (23) is closable with the help of a cover (26).

8. Valve according to claim 7, **characterised in that** the valve shank (21) is guided in the cover (26).

9. Valve according to claim 2, **characterised in that** a duct member (3) of the continuous duct (4) is directly connectible with the axially movable valve shank (21).

10. Valve according to claim 5, **characterised in that** the flange (14) serving as piston and the valve shank (21) form a unit.

11. Valve according to claim 2, **characterised in that** the valve seating surface (17) is associated with the piggable bore (6) of the valve housing (5).

12. Valve according to claim 1, **characterised in that** the bore (6) and the valve closure body (12) in the form of a hollow valve shank (21) are arranged centrally in the valve housing (5).

## Revendications

1. Vanne pour un emplacement de branchement et/ou de raccordement d'un conduit raclable (4) pour du matériau de revêtement, et en particulier pour du vernis, avec un boîtier de vanne (5) pour un premier conduit traversant (4) auquel peut être raccordé sélectivement au moins un deuxième conduit (11), et avec un corps de fermeture de vanne (12), soumis à l'action d'un ressort et déplaçable contre la force d'un ressort de vanne (15), **caractérisée en ce que** le boîtier de vanne (5) et le corps de fermeture de vanne (12) présentent des perçages (6 et 13) respectivement alignés, et, avec le même contour, faisant suite directement l'un à l'autre dans la position de fermeture, d'un même diamètre, où le diamètre est égal au diamètre intérieur du conduit raclable (4), et **en ce que** le corps de fermeture de vanne (12) pour libérer et fermer le deuxième conduit (11) est déplaçable dans le boîtier de vanne (5) dans la direction d'axe de son perçage (6).

2. Vanne selon la revendication 1, **caractérisée en ce que** le corps de fermeture de vanne (12) possède une tige de vanne creuse (21) et à son extrêmité libre (21) une face frontale annulaire comme face d'étanchéité (16), qui peut être relevée d'une face de siège de vanne annulaire (17) côté boîtier et peut être placée sur celle-ci.

3. Vanne selon la revendication 2, **caractérisée en ce que**, côté boîtier, une chambre de vanne (20) est prévue qui est disposée au moins partiellement à l'extérieur de la zone d'une extrêmité libre (18) d'une tige de vanne (21) et qui est reliée à au moins un deuxième conduit (11).

4. Vanne selon la revendication 3, **caractérisée en ce que** la chambre de vanne (20) est une chambre annulaire.

5. Vanne selon la revendication 2, **caractérisée en ce que** la tige de vanne (21) présente une bride (14) servant de piston, apte à être chargée par un milieu sous pression, qui est déplaçable dans une chambre de cylindre (23) entourant la tige de vanne (21).

6. Vanne selon la revendication 5, **caractérisée en ce que** le ressort de vanne (15) s'appuie à la bride (14).

7. Vanne selon la revendication 5, **caractérisée en ce que** la chambre de cylindre (23) peut être fermée à l'aide d'un couvercle (26).

8. Vanne selon la revendication 7, **caractérisée en ce que** la tige de vanne (21) est guidée dans le couvercle (26).

9. Vanne selon la revendication 2, **caractérisée en ce qu'**une pièce de conduit (3) du conduit traversant (4) peut être raccordée directement à la tige de vanne (21) axialement déplaçable.

10. Vanne selon la revendication 5, **caractérisée en ce que** la bride (14) servant de piston et la tige de vanne (21) forment une unité.

11. Vanne selon la revendication 2, **caractérisée en ce que** la face de siège de vanne (17) est associée au perçage raclable (6) du boîtier de vanne (5).

12. Vanne selon la revendication 1, **caractérisée en ce que** le perçage (6) et le corps de fermeture de vanne (12) sont disposés sous la forme d'une tige de vanne creuse (21) d'une manière centrée dans le boîtier de vanne (5).
